# FASCICULE DE BREVET EUROPEEN

(11) **EP 2 545 437 B1**
(45) Date de publication et mention de la délivrance du brevet: **07.04.2021**
(21) Numéro de dépôt: 11712643.3
(22) Date de dépôt: 25.02.2011
(51) Int. Cl.: G06F 3/14, H04L 29/08

(54) **PROCÉDÉ ET SYSTÈME DE PRISE DE CONTRÔLE À DISTANCE D'UN ÉCRAN D'AFFICHAGE**
VERFAHREN UND SYSTEM ZUR FERNSTEUERUNG EINES ANZEIGESCHIRMS
METHOD AND SYSTEM FOR THE REMOTE CONTROL OF A DISPLAY SCREEN

(30) Priorité: 09.03.2010 FR 1051706
(43) Date de publication de la demande: 16.01.2013
(73) Titulaire: CEGEDIM, 92100 Boulogne Billancourt (FR)
(72) Inventeur: Cadou, Olivier, 75009 Paris (FR)
(74) Mandataire: Ahner, Philippe
(86) Numéro de dépôt international: PCT/FR2011/050394
(87) Numéro de publication internationale: WO 2011/110767

(56) Documents cités:
- US-A- 5 164 982
- US-A- 6 105 042
- US-A1- 2003 055 896
- US-A1- 2006 123 064
- US-A1- 2006 277 497
- US-B1- 6 549 214
- US-B1- 6 950 987

## Description

La présente invention concerne de manière générale le domaine des télécommunications et concerne plus particulièrement un procédé et un système de prise de contrôle à distance d'un écran d'affichage initié par au moins un serveur, nommé serveur de présentation à distance, communicant avec au moins un terminal de communication, nommé utilisateur, par l'intermédiaire d'au moins un canal de communication établi à travers un réseau informatique et/ou téléphonique.

Il est connu de mettre en relation des partenaires professionnels par l'intermédiaire de systèmes de conférence téléphoniques, ou encore via des systèmes de visioconférence mis en œuvre sur des infrastructures réseau spécifiques, reposant, par exemple, sur le standard RNIS.

De nombreux services de conférences Web se sont également développés, procurant des moyens simples et efficaces d'enrichir ces séances de travail.

Ces services, dans lesquels les utilisateurs, chacun se servant de son ordinateur ou d'un terminal mobile équipé des ressources ad hoc (typiquement un navigateur et une connexion Internet), communiquent entre eux, en temps réel, en utilisant les protocoles de communication du réseau Internet, sont en effet particulièrement adaptés pour tenir des réunions virtuelles entre utilisateurs distants.

Un service de conférence Web permet ainsi de répondre simplement aux besoins de partage de documents, dans des contextes où les utilisateurs ont besoin de se réunir pour visualiser une présentation, ou une information, mais ne peuvent pas le faire dans une même unité de lieu.

En plus de cette fonctionnalité de partage d'applications ou de fichiers de toutes natures, les services de conférence Web peuvent également proposer des fonctionnalités de gestion de flux audio, vidéo ou encore de messagerie instantanée.

Les différentes solutions de télécommunication décrites ci-dessus, qui peuvent en outre être implémentées de manière couplées, offrent donc toute une gamme de fonctionnalités permettant la tenue de réunions virtuelles ou encore de formations virtuelles avec des personnes distantes.

Ces différentes solutions peuvent se classer en trois catégories :
- Celles qui nécessitent l'installation ou le téléchargement d'une application (plug-in, applet...) sur le poste de tous leurs utilisateurs qu'ils soient présentateurs ou participants. Elles ont le désavantage d'être très souvent refusées par les participants pour des raisons de sécurité ou de confidentialité (un médecin par exemple refusera de suivre une présentation à distance à partir de son ordinateur de peur qu'une installation perturbe le fonctionnement de son outil de travail quotidien ou accède aux dossiers confidentiels de ses patients qu'il contient).
- Celles qui nécessitent l'installation ou le téléchargement d'une application (plug-in, applet...) sur le poste d'une partie de leurs utilisateurs, à savoir les présentateurs uniquement.
- Celles qui ne nécessitent aucune installation et qui ont donc l'avantage de pouvoir être acceptées par tous.

Les solutions existantes de prise de contrôle à distance d'un écran d'affichage se heurtent très souvent à des difficultés de fonctionnement du fait de l'hétérogénéité de l'environnement informatique et du réseau de leurs utilisateurs. A cet effet, la présentation à distance devient très compliquée, voire souvent impossible.

Les des deux cas suivants peuvent alors se présenter fréquemment :
- Un utilisateur choisit un document qu'il va partager avec les autres utilisateurs sur leurs écrans d'affichage respectifs, mais le document choisit ne peut pas être affiché entièrement (taille, animation, fonctionnalités) et/ou ne peut être affiché dans un temps raisonnable sur l'écran d'affichage de tous les utilisateurs, car certains utilisateurs ne disposent pas de la configuration adaptée ou de la bande passante suffisante pour cela.
- Un utilisateur qui souhaite partager des documents avec les autres utilisateurs sur leurs écrans d'affichage respectifs ne peut le faire car il ne dispose pas lui-même d'une bande passante suffisante pour cela. Le document US 2006/123064 A1 (2006-06-08) décrit un procédé de présentation à distance par un serveur, communiquant avec au moins un terminal, par l'intermédiaire d'au moins un canal de communication établi à travers un réseau informatique et/ou téléphonique.

Dans ce contexte, il existe un besoin pour une solution permettant de prendre le contrôle à distance d'un écran d'affichage de manière simple et transparente pour l'utilisateur, et ce, pour toute session de communication à distance mise en œuvre avec au moins un utilisateur, quel que soit le mode de communication sur lequel elle repose, téléphonique, Web, audio ou vidéo, implémentée ou non en combinaison et s'affranchissant des difficultés énoncées ci-dessus, sans installation sur les postes des utilisateurs dans le premier cas et sans installation sur les postes des utilisateurs participants dans le second cas.

L'invention vise à répondre à ce besoin. Cet objectif est atteint par l'utilisation d'un procédé conforme à la définition générique qu'en donne le préambule ci-dessus, plus particulièrement caractérisé en ce qu'il comprend des étapes de :
- mise en place, sur le serveur de présentation (20), d'une table, nommée table Documents & localisations / Configurations, servant de correspondance entre les formats de documents à présenter à distance ou les médias à utiliser (différents formats pour la vidéo live par exemple : taille, nombre d'images par seconde, nombre de bits par pixel, taux de compression), leurs localisations et les configurations requises des terminaux des utilisateurs pour afficher ces documents ou diffuser ces médias, ainsi que d'une table Utilisateur/Configuration répertoriant les différentes configurations des utilisateurs,
- chargement et/ou conversion automatique de documents sur le serveur de présentation par un utilisateur présentant ces documents et éventuellement chargement et/ou conversion sur d'autres localisations puis la mise à jour d'une table de chargement des documents avec ordre de préférence pour les différentes versions d'un même document,
- stockage des documents à partager sur le serveur de présentation ainsi que sur d'autres localisations, (par exemple, mémoire de masse d'un périphérique de l'utilisateur : disque dur local, disque dur d'un serveur de son réseau Intranet ; autre serveur...) avec ordre de préférence pour les différentes localisations d'un même document ou des versions d'un même document.
- mise en place d'une application (principalement un serveur web local) sur le terminal d'un utilisateur permettant la lecture des documents à partager à partir desdites autres localisations , la mise à jour des documents à partager et la synchronisation desdits documents avec ceux présents sur le serveur de présentation,
- test, par le serveur de présentation à distance, de la bande passante (montante et descendante) de chaque utilisateur et lecture de sa configuration logicielle, puis mise à jour de la table Utilisateur/Configuration,
- envoi aux utilisateurs des documents ou des médias en mode synchrone centralisé ou synchrone décentralisé ou asynchrone centralisé ou asynchrone décentralisé suivant le contenu desdits documents ou médias et la configuration du terminal des utilisateurs, permettant une auto-adaptation des documents ou des médias à partager en fonction de la configuration de chaque utilisateur (choix des différents formats et localisations de documents en fonction des configurations des utilisateurs, et paramétrage des médias diffusés : modification de la taille de la vidéo live, de son nombre d'images par seconde, son nombre de couleurs, son taux compression)

Selon l'invention, la table Documents & localisations / Configuration est mise à jour régulièrement par le serveur ou par les utilisateurs.

Selon l'invention, la table Utilisateurs / Configurations est mise à jour régulièrement par le serveur ou par les utilisateurs.

Selon l'invention, la table de chargement des documents est mise à jour régulièrement par le serveur ou par les utilisateurs.

Selon un mode de réalisation, le chargement d'un document par un utilisateur comprend le chargement dudit document sous plusieurs versions, dans différents formats sur le serveur de présentation et éventuellement à d'autres emplacements (mémoire de masse locale, serveur intranet, autres serveur internet...)

Selon un mode de réalisation, l'étape de conversion comprend la génération automatique des différentes versions de documents à l'aide d'un convertisseur de format.

Selon un mode de réalisation, le serveur de présentation à distance propose le téléchargement, sur un périphérique du terminal de l'utilisateur ou sur d'autres localisations, d'une ou plusieurs versions, en différents formats, d'un même document.

Selon un mode de réalisation, l'utilisateur renseigne une bande passante minimale de référence pour chaque version du document ou le serveur calcule ladite bande passante minimale automatiquement.

Selon un mode de réalisation de l'invention, l'étape de test de la bande passante (montante et descendante) de l'utilisateur par le serveur se fait en partageant des documents invisibles de poids connus puis en calculant le temps mis pour la réception desdits documents invisible par l'utilisateur, appelé 'bande passante descendante' ou par le serveur appelé 'bande passante montante'.

Selon un mode de réalisation, l'étape d'envoi du document à partager à l'utilisateur comprend une auto-adaptation de la version du document en fonction de la configuration de l'utilisateur.

Selon un mode de réalisation, le document envoyé aux utilisateurs par le serveur est le document adapté à la plus petite configuration de l'ensemble des configurations desdits utilisateurs, correspondant au mode synchrone centralisé.

Selon un autre mode de réalisation, le même document adapté à la plus petite configuration de l'ensemble des configurations desdits utilisateurs peut être envoyé aux utilisateurs à partir de différentes localisations, ce qui correspond à l'envoi du document à partir d'une localisation adaptée à la configuration de chacun des utilisateurs, correspondant au mode synchrone décentralisé.

Selon un autre mode de réalisation, le document envoyé aux utilisateurs par le serveur est le document le mieux adapté à chacune des configurations des utilisateurs, correspondant au mode asynchrone centralisé.

Selon un autre mode de réalisation, le document le mieux adapté à chacune des configurations des utilisateurs peut être envoyé aux utilisateurs à partir de différentes localisations, ce qui correspond à l'envoi du document à partir d'une localisation adaptée à la configuration de chacun des utilisateurs, correspondant au mode asynchrone décentralisé.

Selon un autre mode de réalisation, pouvant être pris ou non en combinaison avec les précédents, le serveur comprend des moyens de connexion à une communication téléphonique entre les terminaux de communication.

Selon un autre mode de réalisation, pouvant être pris ou non en combinaison avec les précédents, les moyens de connexion comprennent des moyens de connexion à un serveur hébergeant une application de conférence Web à laquelle participent les terminaux de communication.

L'invention concerne encore un serveur de prise de contrôle d'un écran d'affichage nommé serveur de présentation à distance communiquant avec au moins un terminal de communication établi à travers un réseau informatique et/ou téléphonique, comprenant des moyens d'inscription et d'authentification des utilisateurs et étant caractérisé par ce qu'il comprend :
des moyens de mise en place d'une table Documents & localisations / Configurations, servant de correspondance entre les formats de documents à présenter à distance ou les médias à utiliser, leurs localisations et les configurations requises des terminaux des utilisateurs pour afficher ces documents ou diffuser ces médias, ainsi que d'une table Utilisateur/Configuration répertoriant les différentes configurations des utilisateurs,
- des moyens de chargement et/ou conversion automatique des documents sur le serveur de présentation et/ou sur d'autres localisations et des moyens de mise à jour d'une table de chargement,
- des moyens de stockage sur d'autres localisations que le serveur de présentation à distance des documents à partager,
   - des moyens de mise en place d'une application sur le terminal d'un utilisateur permettant la lecture des documents à partager à partir d'autres localisations que le serveur, des moyens de mise à jour de ces documents et des moyens de synchronisation desdits documents avec ceux présents sur le serveur de présentation,
- des moyens de test et de mise à jour, sur le serveur, de la bande passante de chaque utilisateur et des moyens de lecture de sa configuration logicielle ainsi que des moyens de mise à jour de la table Utilisateur/Configuration,
- des moyens d'envoi des documents en mode synchrone ou asynchrone aux utilisateurs permettant une auto-adaptation des documents ou médias à partager en fonction de la configuration de chaque utilisateur.

Selon un autre mode de réalisation, pouvant être pris ou non en combinaison avec les précédents, le serveur de présentation à distance peut être un système de serveurs comprenant :
- au moins un serveur d'authentification des utilisateurs,
- au moins un serveur de présentation à distance,
- au moins un serveur de conversion de données, comprenant des moyens de réception des données du serveur de présentation à distance et des moyens de compression des dites données dans un format prédéterminé,
- au moins un serveur de stockage et de consultation de données, comprenant des moyens de réception des documents, compressés ou non, et des moyens de stockage et de mise à disposition desdits documents.

De préférence, le procédé selon l'invention comprend une étape préalable d'inscription auprès d'un service de partage à distance, au cours de laquelle un utilisateur se connecte à un serveur informatique pour s'identifier auprès du service et reçoit en retour des données d'accès personnalisées au service.

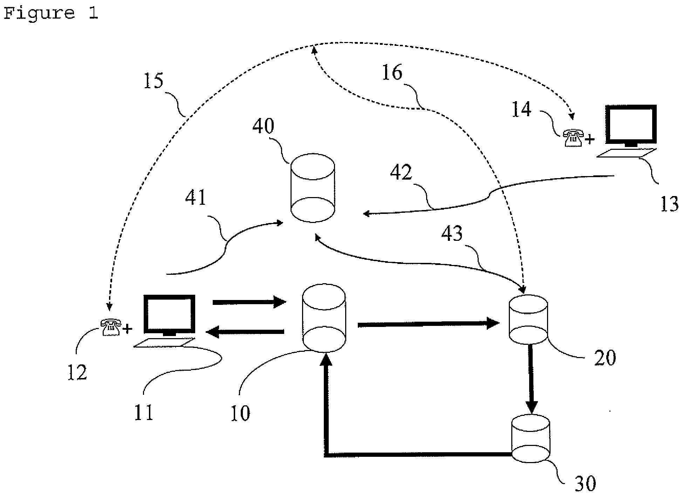

Le système de prise de contrôle à distance d'un écran d'affichage décrit à la figure 1 comprend un serveur informatique 10, prévu pour recevoir les demandes d'inscription d'utilisateurs désireux d'utiliser le service de prise de contrôle à distance. En effet, tout utilisateur souhaitant utiliser le service de prise de contrôle à distance d'un écran d'affichage ou plus particulièrement partager un document avec d'autres utilisateurs distants doit, en étape préalable, s'inscrire et s'identifier, afin d'obtenir en retour des données d'accès personnalisées au service.

Le serveur informatique 10 comprend par exemple un serveur Web 40 hébergeant un site Internet sur lequel l'utilisateur se connecte, via par exemple son ordinateur personnel, pour fournir des informations d'identification en utilisant par exemple un formulaire d'identification à remplir. Les données d'identification fournies par l'utilisateur comprennent par exemple ses coordonnées personnelles (nom, prénom, adresse, etc.). A l'issue de cette étape préalable d'inscription auprès du service de prise de contrôle à distance, le serveur 10 envoie en retour à l'utilisateur des données d'accès personnalisées au service, comprenant par exemple un code d'utilisateur (login) associé à un mot de passe, grâce auquel l'utilisateur pourra accéder à son compte personnel sur le site, permettant d'enregistrer et de charger des documents sous différents formats sur le serveur. En variante, l'accès par l'utilisateur aux différentes fonctionnalités pourra également être permis par l'envoi d'un SMS (« Short Message Service ») d'un courriel, ou encore par un appel à un serveur vocal.

Le serveur 30 de conversion de données est alors adapté pour réaliser une opération de compression des données (des documents, des vidéos, ...) dans un format prédéterminé. Ce format de compression des données peut être sélectionné par le serveur 20 parmi plusieurs formats disponibles, lors de l'envoi des données aux utilisateurs.

Enfin, une fois converties, les données sont prévues pour être transmises vers ses destinations finales, constituées par des serveurs de stockage et de consultation, par exemple le serveur Web 40 ayant servi pour l'inscription, ou encore un serveur vocal ou vidéo, pour être mis à la disposition de l'utilisateur.

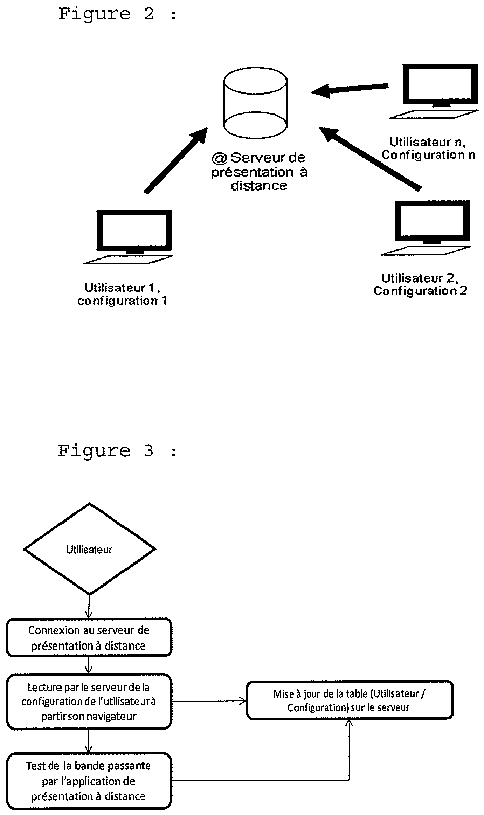

D'autres caractéristiques et avantages de la présente invention apparaîtront plus clairement à la lecture de la description suivante donnée à titre d'exemple illustratif et non limitatif et faite en référence aux tableaux et dessins joints (figures 2 et 3).

La figure 2 représente un système de prise de contrôle à distance d'un écran d'affichage initié par un serveur, nommé serveur de présentation à distance 20, avec au moins un terminal de communication, par l'intermédiaire d'au moins un canal de communication établi à travers un réseau informatique et/ou téléphonique. Celui-ci sera décrit, ci-dessous, dans le cadre de partage de documents à distance entre plusieurs utilisateurs.

Le serveur de présentation à distance 20 est adapté pour mettre à disposition des utilisateurs inscrits et authentifiés les documents suivant leur configuration.

Le serveur de présentation à distance 20, selon l'invention, comprend des moyens de mise à jour d'une table de correspondance Documents&localisations/configurations et d'une table Utilisateurs/Configurations, des moyens de chargement, de stockage et de conversion automatique des documents, incluant la mise à jour d'une table de chargement, des moyens de collecte et de stockage des informations de configuration des utilisateurs, des moyens de test et de mise à jour de la bande passante des utilisateurs et des moyens d'envoi de documents en mode synchrone, centralisé ou décentralisé ou asynchrone, centralisé ou décentralisé, aux utilisateurs.

Plus précisément, le serveur 20 permettant la présentation à distance dispose d'une table de correspondance mise à jour régulièrement, le tableau 1 à la fin de description représente un aperçu de celle-ci. La table comprend, en entrée, la liste des différents formats de documents/médias pouvant être partagés à distance et de leurs localisations, et, en sortie, les configurations requises du côté des utilisateurs pour les visualiser entièrement dans un temps raisonnable. Les paramètres de configuration requis du côté des utilisateurs sont le type du terminal, le système d'exploitation et sa version, la résolution de l'écran, les plug-ins et les applications installées ainsi que leurs versions, la taille de la bande passante.... La liste n'étant pas exhaustive et pouvant inclure tout type de paramètres permettant de connaître les particularités de la configuration de l'utilisateur afin d'optimiser en sortie les informations transmises. Toutes ces données de configuration sont collectées par le serveur de présentation qui met alors à jour une table Configurations / Utilisateurs.

Lorsqu'un utilisateur charge sur le serveur 20 des documents qu'il souhaite de partager avec d'autres utilisateurs, ledit serveur 20 va lui proposer de charger plusieurs versions du document dans des formats différents, ou bien il va lui proposer de charger des versions alternatives du document de manière à mettre à jour une table de chargement pour lesdits documents. Le tableau 2 décrit un exemple de table de chargement de documents (présenté à la fin de la description).

Si l'utilisateur souhaite charger une vidéo, plusieurs versions, de différentes tailles et de différentes qualités (nombre d'images par seconde, nombre de couleurs), compressées ou non, en streaming ou non, peuvent être chargées comme versions alternatives.

En outre le serveur 20 peut proposer à l'utilisateur de localiser sur un autre périphérique, par exemple la mémoire de son ordinateur ou de son assistant personnel, des versions dans des formats éventuellement différents.

Le serveur de présentation à distance peut générer automatiquement des versions de documents à l'aide d'un convertisseur de format. Le serveur 20 demande à l'utilisateur d'indiquer la bande passante requise pour les différentes versions de documents chargés sur le serveur ou lorsqu'il le peut les calcule automatiquement. La bande passante requise pour chaque document est évaluée en fonction de son contenu et donc de son poids. Le serveur 20 demande à l'utilisateur de classer par ordre de préférence, de qualité, les différents formats chargés pour un même document. En outre, le serveur demande à l'utilisateur si le document doit être présenté en mode synchrone, c'est-à-dire envoyé à tous les utilisateurs le même document adapté au plus petit configuration de l'ensemble des configurations, ou bien présenté en mode asynchrone, c'est-à-dire envoyé une version de document optimal adapté à chacun des utilisateurs.

La connexion de l'utilisateur au serveur 20 se fait par l'intermédiaire d'un outil de navigation sur le réseau (exemple: un navigateur internet). Les navigateurs internet disposent d'agents leurs permettant de collecter des informations sur la configuration de leurs utilisateurs, à savoir, le type de terminal (PC, Mac,...), le type de navigateur (Marque et version du navigateur internet par exemple), la résolution de l'écran d'affichage, les plug-in installés (Adobe PDF, Adobe Flash...) et leurs versions, la version java installée.... Le serveur de présentation à distance va lire les informations collectées puis les stocker dans la table Utilisateurs/Configurations (tableau 3) afin de pouvoir les utiliser par la suite. La figure 3 représente les différentes étapes concernant la mise à jour de la bande passante des utilisateurs dans la table Utilisateur/Configuration (présenté à la fin de la description). Afin de tester la bande passante des utilisateurs le serveur 20 va partager des documents invisibles, de poids connus, avec lesdits utilisateurs et calculer le temps mis pour la réception desdits documents par chacun des utilisateurs et par le serveur lui-même. Ce test permet au serveur 20 de déterminer de manière approximative la taille de la bande passante (montante et descendante) disponible pour chaque utilisateur du service de présentation à distance. La taille de la bande passante (en téléchargement montant et descendant) sera rajoutée à la configuration de chaque utilisateur dans la table Utilisateur/Configuration. Lors des présentations à distance des documents, le calcul de la bande passante disponible pour chaque utilisateur peut être réactualisé régulièrement par le serveur.

Lorsque le serveur reçoit la demande d'affichage d'un document de la part d'un utilisateur, il va consulter la table de correspondance « Documents & localisation / Configuration », la table « Utilisateur / Configuration » et la table de chargement des documents. Puis, en fonction des données disponibles dans ces tables, concernant les différentes configurations des différents utilisateurs, le serveur peut envoyer le ou les documents en mode synchrone ou asynchrone, centralisé ou décentralisé.

Tel que présenté en tableau 4, le mode synchrone envoie, à tous les utilisateurs, le même document adapté à la plus petite configuration des utilisateurs connectés au serveur. Cette demande peut être réalisée par le serveur de présentation à distance qui envoie alors le document ou être transmise (Cf. tableau 5) par le serveur de présentation à distance à un autre serveur (par exemple un serveur local) pour être réalisée à partir d'une autre localisation dudit document (par exemple la mémoire de masse du terminal de l'utilisateur ou encore l'une des mémoires de masse présente sur un serveur de son réseau Intranet).

Le tableau 5 décrit le mode asynchrone, qui consiste en l'envoi, par le serveur de présentation, d'un document adapté à la configuration de chaque utilisateur. En effet, le serveur de présentation possède des moyens d'auto-adaptation des contenus partagés selon la configuration des utilisateurs et, entres autres, de la taille de la bande passante des utilisateurs.

### Exemple de présentation de documents à distance sur différentes typologies d'utilisateurs :

Pour que les commerciaux et formateurs de la société K puissent faire des présentations commerciales à distance, un administrateur de la société K va installer pour eux sur le serveur de présentation à distance 3 versions de la même présentation classées par ordre de préférence : une présentation HTML contenant des animations adobe Flash version 10 et deux versions alternatives, l'une HTML avec des animations GIF pour les utilisateurs qui n'ont pas le plug-in ou la bonne version du plug-in adobe Flash player installée sur leur machine et une seconde version du contenu allégée pour Smartphone (iPhone, Blackberry...).

Au moment du chargement, le serveur lui offre également la possibilité de stocker ses documents sur la mémoire de masse de son terminal, ce qu'il fait avec la version HTML contenant des animations adobe Flash version 10 sur les machines des trois futurs utilisateurs et d'installer une application permettant la lecture des contenus en mode décentralisé.

### Mode synchrone centralisé

Un des commerciaux en question décide de réaliser une première présentation à distance depuis chez lui à un client. Il se connecte au serveur et son client également. Le serveur détecte qu'il travaille sur PC, sous Microsoft Windows XP, qu'il s'est connecté avec Microsoft Internet Explorer 7.0, que sa résolution d'écran est 1024 x 768 et qu'il dispose notamment du plug-in Flash 10.0 installé sur sa machine.

Son client travaille sur Mac, sous OS X, il s'est connecté avec Firefox 6.0, sa résolution d'écran est 1024 x 768 et il dispose du plug-in Flash 9.0 installé sur sa machine.

Le test de bande passante effectué montre que les deux utilisateurs sont connectés disposent tous les deux de l'ADSL haut débit.

Dès lors, le serveur va automatiquement mettre à jour son menu de navigation pour mettre à sa disposition la version HTML avec des animations GIF afin qu'il puisse la partager, en mode synchrone (son client et lui-même voient exactement la même présentation à l'écran), avec son client qui ne dispose pas de la bonne version de Flash pour afficher la version Flash à l'écran.

### Mode synchrone décentralisé

Ce même commercial sort de chez lui, monte dans un taxi pour se rendre à la gare et décide de réaliser sur le trajet une présentation à distance à un autre de ses clients. Il se connecte au serveur à travers l'application installée sur son portable et son client se connecte directement au serveur de présentation à travers son navigateur habituel. Le serveur détecte que le commercial travaille sur PC, sous Microsoft Windows XP, qu'il s'est connecté avec Microsoft Internet Explorer 7.0, que sa résolution d'écran est 1024 x 768 et qu'il dispose notamment du plug-in Flash 10.0 installé sur sa machine.

Son client travaille sur PC également, sous Microsoft Windows XP, il s'est connecté avec Microsoft Internet Explorer 7.0, sa résolution d'écran est 1280 x 1024 et il dispose notamment du plug-in Flash 10.0 installé sur sa machine.

Le test de bande passante effectué montre que le commercial dispose d'une très mauvaise bande passante (probablement 3G ou inférieure) et que son client lui dispose de l'ADSL haut débit.

Dès lors, le serveur passe automatiquement en mode asynchrone et l'application locale présente sur son poste met à jour le menu de navigation du commercial afin que lorsque celui-ci l'utilise pour partager un document, son navigateur aille chercher pour lui le document correspondant situé sur son disque dur (plutôt que de requérir son téléchargement depuis le serveur) et envoie une instruction au serveur afin que celui-ci mette à disposition de son client le document correspondant.

Dans cet exemple précis, le commercial et son client verront exactement le même document sur leurs écrans respectifs, l'un l'ayant chargé depuis son disque dur, l'autre depuis le serveur.

Le commercial s'affranchit ainsi des difficultés liées à sa trop faible bande passante, puisqu'il ne télécharge plus aucun document, il envoie ou reçoit seulement des instructions du serveur.

### Mode synchrone décentralisé

Enfin, ce même commercial décide de s'entrainer avec l'un de ses collègues, disposant de la même configuration que lui et d'une aussi faible bande passante (inférieure à 3G) .

Dès lors, le serveur passe automatiquement en mode synchrone décentralisé et les menus de navigation des deux commerciaux sont mis à jour afin que les deux applications aillent chercher les documents à partager sur leurs mémoires de masse respectives (plutôt que de requérir leur téléchargement depuis le serveur). Ainsi, les deux utilisateurs verront exactement le même document sur leurs écrans respectifs comme s'ils étaient connectés en haut débit, chacun l'ayant chargé depuis son disque dur. Ils s'affranchissent ainsi des difficultés liées à leur trop faible bande passante, puisqu'ils ne téléchargent plus aucun document, ils envoient ou reçoivent seulement des instructions du serveur (pour l'affichage, mais aussi pour la reproduction à distance des événements : mouvement de la souris, lancement des animations...).

**Tableau 1:**

| | | Configuration requise | | | | | |
|---|---|---|---|---|---|---|---|
| Format de document / média | Localisa tion | Plug in | Navigateur | ... | Bande passante montante requise | Bande passante descendante requise | Hardware requis |
| HTML | Serveur | | | | | 3G (1 Mbits/s) | |
| HTML | Disque dur local | | | | | Modem (15 Kbits/s) | |
| HTML + animations adobe Flash v10 | Serveur | Adobe Flash Player 10.0 | | | | Wifi minimum (5 Mbits/s) | |
| Microsoft Powerpoint | Serveur | | Microsoft IE version 5.0 et ultérieure | | | 3G (1 Mbits/s) | |
| Adobe Flash version 10.0 | Serveur | Adobe Flash Player 10.0 | | | | Wifi minimum (5 Mbits/s) | |
| Adobe Flash version 9.0 | Serveur | Adobe Flash Player 9.0 ou ultérieur | | | | Wifi minimum (5 Mbits/s) | |
| Vidéo 640x480, 8 bits, 20 images par seconde | Serveur | Adobe Flash Player version 7.0 ou ultérieur | | | | ADSL Haut débit (20 Mbits/s) | |
| Vidéo 640x480, 8 bits, 20 images par seconde | Disque dur local | Adobe Flash Player version 7.0 ou ultérieure | | | | Modem (15 Kbits/s) | |
| Adode PDF | Serveur | Adobe PDF Reader | | | | 3G (1 Mbits/s) | |
| Vidéo Live 160x120 avec voix sur IP | | Adobe Flash Player version 7.0 ou ultérieure | | | 500 Kbits/s | 500 Kbits/s | Webcam + carte audio + enceintes + micro intégré ou microcasque. |
| Vidéo Live 320x240 avec voix sur IP | | Adobe Flash Player version 7.0 ou ultérieure | | | 800 Kbits/s | 800 Kbits/s | Webcam + carte audio + enceintes + micro intégré ou microcasque. |
| Smartphone/PDA document | Serveur | | | | | | Smartphone/P DA (iPhone, Blackberry...) |

### Exemple de table de correspondance Format / Localisation / configuration requise

**Tableau 2:**

| Nom du dossier | Date | Format des documents contenus dans le dossier | Localisation | Bande passante requise | Ordre |
|---|---|---|---|---|---|
| 20090201 _ PRESENT ATION_FR OC HTML | 19/12/20 09 | HTML | http://Serveur007.kadrige.com/ HTML | Wifi minimum (5 Mbits/s) | 2 |
| 20090201 _ PRESENT ATION_FR OC_ HTML | 19/12/20 09 | HTML | F:/MyKadrige/Content/HMTL | Modem (15 Kbits /s) | 2 |
| 20090201 _ PRESENT ATION_FR _OC_HTML -FL | 18/12/20 09 | HTML + animations adobe Flash v10 | http://Serveur007.kadrige.com/ HTML-FL10 | Wifi minimum (5 Mbits/s) | 1 |
| 20090201 _ PRESENT ATION_FR _OC_HTML -FL | 17/12/20 09 | HTML + animations adobe Flash v10 | F:/MyKadrige/Content/HMTL-FL10 | Modem (15 Kbits/s) | 1 |

### Exemple de table de chargement de document

**Tableau 3 :**

| Configuration | | | | | | | | |
|---|---|---|---|---|---|---|---|---|
| Nom d'Utilisateur | Mot de passe | Date | Navigateur | Plug in | ... | Bande passante montante | Bande passante descendante | Hardware |
| ocadou | ******* | 15/01/ 09 | Microsoft IE version 8.0 | Adobe Flash Player 10.0 | | 430 Kbits/s | 850 Kbits/s | Webcam |
| vdubrau | ******* | 17/01/ 09 | Safari | Adobe Flash Player 9.0 | | 750 Kbits/s | 7 Mbits/s | |
| sprin | ******* | 16/01/ 09 | Firefox | Adobe Flash Player 10.0 | | 750 Kbits/s | 5,6 Mbits/s) | |
| mlebreton | ******* | 15/01/ 09 | Chrome | Adobe Flash Player 10.0 | | 900 Kbits/s | 11 Mbits/s | |
| Svaid | ******* | 15/01/ 09 | Safari | | | 170 Kbits/s | 250 Kbits/s | iPhone |

### Exemple de table de utilisateurs / Configuration

**Tableau 4 : Mode synchrone**

| | | | | |
|---|---|---|---|---|
| 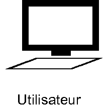 | | | 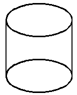 | @ Serveur de présentation à distance |
| Demande de connexion à travers un navigateur ou à travers une application pour l'utilisateur-présentateur qui dispose d'une version de ses documents à partager en local. | 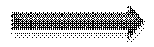 | | Lecture des informations de configuration à disposition dans le navigateur de l'utilisateur et Mise à jour de la table de correspondance (Utilisateur/ Configuration) | |
| Demande automatique de chargement de docu ments Test invisibles pour calcul de la bande passante (montante et descendante) | 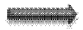 | | Calcul des temps de chargements des document s par l'utilisateur et le serveuret détermination approximative de la bandepassante disponible en téléchargement montant et descendant. Miseà jour de la table de correspondance (Utilisateur/ Configuration) | |
| Demande d'affichage d'un document multimédia | 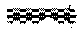 | | Lecture de la table de correspondance « Utilisateur / Configuration » permettant d'obtenir la configuration de l'utilisateur. Lecture de la table de correspondance Type de document Multimédia & localisation / Configuration de l'utilisateur | |
| Affichage du document | 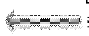 | | Envoi du document Multiméda disponible sur le serveur correspondant à la configuration de l'utilisateur ou envoi de la demande d'affichage à partir d'une localisation autre que le serveur (locale par exemple) | |

**Tableau 5 : Mode asynchrone**

| | | | | |
|---|---|---|---|---|
| 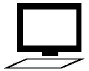 Utilisateur | | | 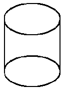 | @ Serveur de présentation à distance |
| Demande de connexion à travers un navigateur ou à travers une application pour l'utilisateurprésentateur qui dispose d'une version de ses documents à partager en local. | 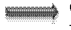 | | Lecture des informations de configuration à disposition dans le navigateur de l'utilisateur et Mise à jour de la table de correspondance (Utilisateur/Configuration) | |
| Demande automatique de chargement de documents Test invisibles pour calcul de la bande passante (montante et descendante) | 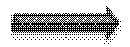 | | Calcul des temps de chargements des document s par l'utilisateur et le serveur et détermination approximative de la bande passante disponible en téléchargement montant et descendant. Mise à jour de la table de correspondance (Utilisateur/Configuration) | |
| Demande d'affichage d'un document multimédia | 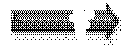 | | Lecture de la table de correspondance « Utilisateur/ Configuration » permettant d'obtenir la configuration de l'utilisateur. Lecture de la table de correspondance Type de docu ment Multimédia & localisation / Configuration de l'utilisateur. | |
| Affichage du document | 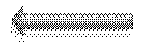 | | Envoi du document Multiméda disponible sur le serveur correspondant au plus petit dénominateur commun des configurations des utilisateurs connectés au serveur ou envoi de la demande d'affichage à partir d'une localisation autre que le serveur(locale par exemple) | |

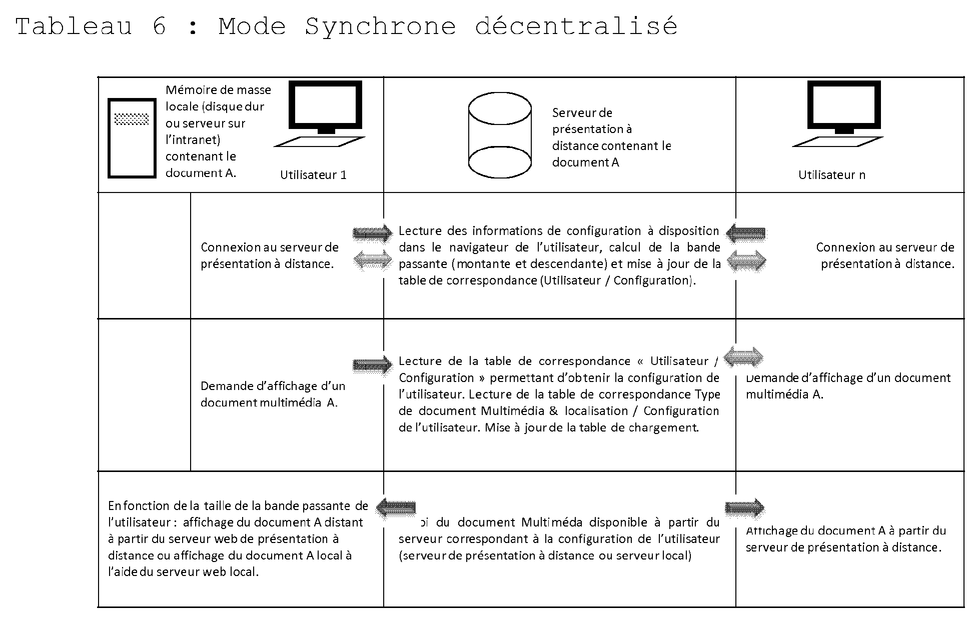

## Revendications

1. Procédé de prise de contrôle à distance d'un écran d'affichage initié par un serveur (20), nommé serveur de présentation à distance, communiquant avec au moins un terminal (11, 13), par l'intermédiaire d'au moins un canal de communication établi à travers un réseau informatique et/ou téléphonique, le procédé étant **caractérisé par** les étapes suivantes :
- mise en place, sur le serveur de présentation (20), d'une table, nommée table Documents & localisations / Configurations, servant de correspondance entre les formats de documents à présenter à distance ou les médias à utiliser, leurs localisations et les configurations requises des terminaux des utilisateurs pour afficher ces documents ou diffuser ces médias, ainsi que d'une table Utilisateur/Configuration répertoriant les différentes configurations des utilisateurs,
- chargement et/ou conversion automatique de documents sur le serveur de présentation (20) par un utilisateur présentant ces documents éventuellement chargement et / ou conversion sur d'autres localisations puis mise à jour d'une table de chargement des documents,
- stockage des documents à partager sur le serveur de présentation (20) ainsi que sur d'autres localisations,
- mise en place d'une application sur le terminal d'un utilisateur permettant la lecture des documents à partager à partir desdites autres localisations, la mise à jour des documents à partager et la synchronisation desdits documents avec ceux présents sur le serveur de présentation (20),
- test, par le serveur de présentation à distance, de la bande passante de chaque utilisateur et lecture de sa configuration logicielle, puis mise à jour de la table Utilisateur/Configuration,
- envoi aux utilisateurs des documents ou des médias en mode synchrone ou asynchrone suivant le contenu desdits documents ou médias et la configuration du terminal des utilisateurs, permettant une auto-adaptation des documents ou des médias à partager en fonction de la configuration de chaque utilisateur.

2. Procédé de contrôle à distance d'un écran d'affichage selon la revendication 1 **caractérisé en ce qu'**il comprend une étape préalable facultative d'inscription et d'authentification des utilisateurs.

3. Procédé selon la revendication 1 **caractérisé en ce que** la table de correspondance Documents & localisations / Configuration est mise à jour régulièrement par le serveur ou par les utilisateurs.

4. Procédé selon la revendication 1 **caractérisé en ce que** la table Utilisateurs / Configurations est mise à jour régulièrement par le serveur ou par les utilisateurs.

5. Procédé selon la revendication 1 **caractérisé en ce que** la table de chargement des documents est mise à jour régulièrement par le serveur ou par les utilisateurs.

6. Procédé selon la revendication 1 **caractérisé en ce que** l'étape de chargement d'un document par un utilisateur comprend le chargement de plusieurs versions, dans différents formats, d'un même document sur le serveur de présentation (20).

7. Procédé selon la revendication 1 **caractérisé en ce qu'**il comporte une étape de chargement, sur un périphérique du terminal de l'utilisateur, de plusieurs versions, dans différents formats, d'un même document.

8. Procédé selon la revendication 1 **caractérisé en ce que** l'étape de conversion comprend la génération automatique des différentes versions de documents à l'aide d'un convertisseur de format.

9. Procédé selon l'une des revendications précédentes **caractérisé en ce que** l'utilisateur renseigne une bande passante minimale de référence pour chaque version du document ou le serveur calcule ladite bande passante minimale automatiquement.

10. Procédé selon la revendication 1 **caractérisé en ce que** l'étape de test de la bande passante de l'utilisateur par le serveur se fait en partageant des documents invisibles de poids connus puis en calculant le temps mis pour la réception desdits documents invisible par l'utilisateur, appelé 'bande passante descendante' ou par le serveur appelé 'bande passante montante' .

11. Procédé selon la revendication 1 **caractérisé en ce que** l'étape d'envoi du document à partager à l'utilisateur comprend une auto-adaptation de la version du document en fonction de la configuration de l'utilisateur.

12. Procédé selon la revendication 11 **caractérisé en ce que** le document envoyé aux utilisateurs par le serveur est le document adapté à la plus petite configuration de l'ensemble des configurations desdits utilisateurs, correspondant au mode synchrone.

13. Procédé selon la revendication 11 **caractérisé en ce que** le document envoyé aux utilisateurs par le serveur est le document le mieux adapté à chacune des configurations desdits utilisateurs, correspondant au mode asynchrone.

14. Procédé selon l'une des revendications 11, 12 ou 13 **caractérisé en ce que** le document est envoyé aux utilisateurs à partir de différents localisations, correspond à l'envoi du document à partir d'une localisation adaptée à la configuration de chacun des utilisateurs, correspondant au mode décentralisé.

15. Serveur de prise de contrôle d'un écran d'affichage nommé serveur de présentation à distance (20) communiquant avec au moins un terminal de communication établi à travers un réseau informatique et/ou téléphonique, comprenant des moyens d'inscription et d' authentification des utilisateurs et étant **caractérisé par** ce qu'il comprend :
- des moyens de mise en place d'une table Documents & localisations / Configurations, servant de correspondance entre les formats de documents à présenter à distance ou les médias à utiliser, leurs localisations et les configurations requises des terminaux des utilisateurs pour afficher ces documents ou diffuser ces médias, ainsi que d'une table Utilisateur/Configuration répertoriant les différentes configurations des utilisateurs,
- des moyens de chargement et/ou conversion automatique des documents sur le serveur de présentation (20) et/ou sur d'autres localisations et des moyens de mise à jour d'une table de chargement,
- des moyens de stockage sur d'autres localisations que le serveur de présentation à distance (20) des documents à partager,
- des moyens de mise en place d'une application sur le terminal d'un utilisateur permettant la lecture des documents à partager à partir d'autres localisations que le serveur, des moyens de mise à jour de ces documents et des moyens de synchronisation desdits documents avec ceux présents sur le serveur de présentation (20),
- des moyens de test et de mise à jour, sur le serveur, de la bande passante de chaque utilisateur et des moyens de lecture de sa configuration logicielle ainsi que des moyens de mise à jour de la table Utilisateur/Configuration,
- des moyens d'envoi des documents en mode synchrone ou asynchrone aux utilisateurs permettant une auto-adaptation des documents ou médias à partager en fonction de la configuration de chaque utilisateur.

16. Système de prise de contrôle à distance d'un écran d'affichage comprenant au moins un serveur d'enregistrement et d'authentification des utilisateurs, **caractérisé en ce qu'**il comprend au moins en outre un serveur de présentation à distance (20) selon la revendication 15,
- au moins un serveur (30) de conversion des données, comprenant des moyens de réception des documents et des moyens de conversion desdits documents en différents formats, au moins un serveur de stockage des informations de configuration des utilisateurs,
- au moins un serveur de test de la bande passante des utilisateurs puis de mise à jour de la table de correspondance Utilisateur/Configuration,
- au moins un serveur d'auto-adaptation des documents à partager en fonction de la configuration de chaque utilisateur.

## Patentansprüche

1. Verfahren zur Fernsteuerung eines Anzeigebildschirms, der über einen Server (20), Fernpräsentationsserver genannt, initiiert wird, der mit zumindest einem Endgerät (11, 13) über zumindest einen über ein Computer- und/oder Telefonnetz erstellten Kommunikationskanal kommuniziert, wobei das Verfahren durch die folgenden Schritte gekennzeichnet ist:
- Einrichten von einer Tabelle, "Dokumente & Standorte / Konfigurations"-Tabelle genannt, auf dem Präsentationsserver (20), die als Verknüpfung zwischen den Formaten der entfernt zu präsentierenden Dokumente oder der zu verwendenden Medien, ihren Standorten und ihren Konfigurationen dient, die von den Endgeräten der Nutzer zur Anzeige dieser Dokumente oder zur Ausstrahlung dieser Medien benötigt werden, sowie von einer "Nutzer/Konfigurations"-Tabelle, in der die verschiedenen Konfigurationen der Nutzer aufgeführt sind,
- automatisches Laden und/oder Konvertieren von Dokumenten auf dem Präsentationsserver (20) durch einen Nutzer, der diese Dokumente präsentiert, gegebenenfalls Laden und/oder Konvertieren an weiteren Standorten, dann Aktualisieren einer Dokumentenladetabelle,
- Speichern der gemeinsam zu nutzenden Dokumente sowohl auf dem Präsentationsserver (20) als auch an anderen Standorten,
- Einrichten einer Anwendung auf dem Endgerät eines Nutzers, die das Einlesen von gemeinsam zu nutzenden Dokumenten ausgehend von den anderen Standorten, das Aktualisieren der gemeinsam zu nutzenden Dokumente und die Synchronisierung dieser Dokumente mit den auf dem Präsentationsserver (20) vorhandenen Dokumenten ermöglicht,
- Testen der Bandbreite jedes Nutzers durch den Fernpräsentationsserver und Einlesen seiner Software-Konfiguration, dann Aktualisieren der "Nutzer/Konfigurations"-Tabelle,
- Senden von Dokumenten oder Medien an Nutzer im synchronen oder asynchronen Modus entsprechend dem Inhalt dieser Dokumente oder Medien und der Konfiguration des Endgerätes der Nutzer, wobei eine Selbstanpassung der gemeinsam zu nutzenden Dokumente oder Medien entsprechend der Konfiguration jedes Nutzers ermöglicht wird.

2. Verfahren zur Fernsteuerung eines Anzeigebildschirms nach Anspruch 1, **dadurch gekennzeichnet, dass** es einen optionalen vorherigen Schritt der Nutzerregistrierung und -authentifizierung umfasst.

3. Verfahren nach Anspruch 1, **dadurch gekennzeichnet, dass** die "Dokumente & Standorte/Konfigurations"-Verknüpfungstabelle regelmäßig durch den Server oder durch die Nutzer aktualisiert wird.

4. Verfahren nach Anspruch 1, **dadurch gekennzeichnet, dass** die "Nutzer/Konfigurations"-Tabelle regelmäßig durch den Server oder durch die Nutzer aktualisiert wird.

5. Verfahren nach Anspruch 1, **dadurch gekennzeichnet, dass** die Dokumentenladetabelle regelmäßig durch den Server oder durch die Nutzer aktualisiert wird.

6. Verfahren nach Anspruch 1, **dadurch gekennzeichnet, dass** der Schritt des Ladens eines Dokuments durch einen Nutzer das Laden mehrerer Versionen desselben Dokuments in unterschiedlichen Formaten auf den Präsentationsserver (20) umfasst.

7. Verfahren nach Anspruch 1, **dadurch gekennzeichnet, dass** es einen Schritt des Ladens mehrerer Versionen desselben Dokuments in verschiedenen Formaten auf ein Peripheriegerät des Endgeräts des Nutzers umfasst.

8. Verfahren nach Anspruch 1, **dadurch gekennzeichnet, dass** der Schritt der Konvertierung die automatische Erzeugung der verschiedenen Versionen von Dokumenten unter Verwendung eines Formatkonverters umfasst.

9. Verfahren nach einem der vorhergehenden Ansprüche, **dadurch gekennzeichnet, dass** der Nutzer eine minimale Referenzbandbreite für jede Version des Dokuments eingibt oder der Server diese minimale Bandbreite automatisch berechnet.

10. Verfahren nach Anspruch 1, **dadurch gekennzeichnet, dass** der Schritt des Testens der Bandbreite des Nutzers durch den Server durchgeführt wird, indem unsichtbare Dokumente mit bekanntem Gewicht gemeinsam genutzt werden und dann die Zeit berechnet wird, die für den Empfang dieser unsichtbaren Dokumente durch den Nutzer, "Downlink-Bandbreite" genannt, oder durch den Server, "Uplink-Bandbreite" genannt, benötigt wird.

11. Verfahren nach Anspruch 1, **dadurch gekennzeichnet, dass** der Schritt des Sendens des gemeinsam zu nutzenden Dokuments an den Nutzer eine Selbstanpassung der Version des Dokuments entsprechend der Konfiguration des Nutzers umfasst.

12. Verfahren nach Anspruch 11, **dadurch gekennzeichnet, dass** das vom Server an die Nutzer gesendete Dokument dasjenige Dokument ist, das an die kleinste Konfiguration aller Konfigurationen dieser Nutzer angepasst ist, entsprechend dem synchronen Modus.

13. Verfahren nach Anspruch 11, **dadurch gekennzeichnet, dass** das vom Server an die Nutzer gesendete Dokument dasjenige Dokument ist, das am besten an jede der Konfigurationen dieser Nutzer angepasst ist, entsprechend dem asynchronen Modus.

14. Verfahren nach einem der Ansprüche 11, 12 oder 13, **dadurch gekennzeichnet, dass** das Dokument an die Nutzer von verschiedenen Standorten aus gesendet wird, was dem Senden des Dokuments von einem Standort aus, der an die Konfiguration jedes der Nutzer angepasst ist, entspricht, entsprechend dem dezentralisierten Modus.

15. Server zur Steuerung eines Anzeigebildschirms, Fernpräsentationsserver (20) genannt, der mit zumindest einem über ein Computer- und/oder Telefonnetz erstellten Kommunikationsendgerät kommuniziert, enthaltend Mittel zur Registrierung und Authentifizierung der Nutzer, **dadurch gekennzeichnet ist, dass** er enthält:
- Mittel zum Einrichten von einer Tabelle "Dokumente & Standorte/Konfigurationen", die als Verknüpfung zwischen den Formaten der entfernt zu präsentierenden Dokumente oder der zu verwendenden Medien, ihren Standorten und den Konfigurationen dient, die von den Endgeräten der Nutzer zur Anzeige dieser Dokumente oder zur Ausstrahlung dieser Medien benötigt werden, sowie von einer Tabelle "Nutzer/Konfigurationen", in der die verschiedenen Konfigurationen der Nutzer aufgeführt sind,
- Mittel zum automatischen Laden und/oder Konvertieren von Dokumenten auf dem Präsentationsserver (20) und/oder an anderen Standorten und Mittel zum Aktualisieren einer Ladetabelle,
- Mittel zum Speichern an anderen Standorten als dem Fernpräsentationsserver (20) zur Präsentation der gemeinsam zu nutzenden Dokumente,
- Mittel zum Einrichten einer Anwendung auf dem Endgerät eines Nutzers, die das Lesen von Dokumenten ermöglicht, die von anderen Standorten als dem Server gemeinsam zu nutzen sind, Mittel zum Aktualisieren dieser Dokumente und Mittel zur Synchronisierung dieser Dokumente mit denen, die auf dem Präsentationsserver (20) vorhanden sind,
- Mittel zum Testen und Aktualisieren der Bandbreite jedes Nutzers auf dem Server und Mittel zum Einlesen seiner Softwarekonfiguration sowie Mittel zum Aktualisieren der Tabelle "Nutzer/Konfiguration",
- Mittel zum Senden von Dokumenten im synchronen oder asynchronen Modus an die Nutzer, die eine Selbstanpassung der gemeinsam zu nutzenden Dokumente oder Medien entsprechend der Konfiguration jedes Nutzers ermöglichen.

16. System zur Fernsteuerung eines Anzeigebildschirms, das zumindest einen Server zur Nutzerregistrierung und -authentifizierung umfasst, **dadurch gekennzeichnet, dass** es ferner zumindest einen Fernpräsentationsserver (20) nach Anspruch 15 umfasst, sowie
- zumindest einen Server (30) zum Konvertieren von Daten, der Mittel zum Empfangen von Dokumenten und Mittel zum Konvertieren der Dokumente in verschiedene Formate umfasst, zumindest einen Server zum Speichern von Nutzerkonfigurationsinformationen,
- zumindest einen Server zum Testen der Nutzerbandbreite und zum Aktualisieren der Verknüpfungstabelle "Nutzer/Konfiguration",
- zumindest einen Server zur Selbstanpassung der gemeinsam zu nutzenden Dokumente entsprechend der Konfiguration jedes Nutzers.

## Claims

1. A method for remotely controlling a display screen initiated by a server (20), called a remote presentation server, communicating with at least one terminal (11, 13), through at least one communication channel established through a computer and/or telephone network, the method being **characterised by** the following steps of:
- setting up, on the presentation server (20), a table, called Documents & locations/Configurations, being used as a correspondence between formats of documents to be remotely presented or media to be used, their locations and configurations required from users' terminals to display these documents or broadcast these media, as well as a User/Configuration table listing the different users' configurations,
- automatically loading and/or converting documents on the presentation server (20) by a user presenting these documents, possibly loading and/or converting in other locations, and then updating a document loading table,
- storing the documents to be shared on the presentation server (20) as well as in other locations,
- setting up an application on the user's terminal for reading the documents to be shared from said other locations, updating the documents to be shared and synchronising said documents with those present on the presentation server (20),
- testing, by the remote presentation server, the bandwidth of each user and reading its software configuration, and then updating the User/Configuration table,
- sending the documents or media to the users in synchronous or asynchronous mode according to the content of said documents or media and the configuration of the users' terminal, for self-adapting the documents or media to be shared depending on each user's configuration.

2. The method for remotely controlling a display screen according to claim 1, **characterised in that** it comprises a prior optional step of registering and authenticating the users.

3. The method according to claim 1, **characterised in that** the Documents & locations/Configuration correspondence table is regularly updated by the server or by the users.

4. The method according to claim 1, **characterised in that** the Users/Configuration table is regularly updated by the server or by the users.

5. The method according to claim 1, **characterised in that** the document loading table is regularly updated by the server or by the users.

6. The method according to claim 1, **characterised in that** the step of loading a document by a user comprises loading several versions, in different formats, of a same document on the presentation server.

7. The method according to claim 1, **characterised in that** it includes a step of loading, on a peripheral of the user's terminal, several versions, in different formats of a same document.

8. The method according to claim 1, **characterised in that** the converting step comprises automatically generating several versions of documents using a format converter.

9. The method according to one of the previous claims, **characterised in that** the user informs about a minimum reference bandwidth for each version of the document or the server automatically calculates said minimum bandwidth.

10. The method according to claim 1, **characterised in that** the step of testing the user's bandwidth by the server is made by sharing invisible documents having known weights, and then calculating the time necessary for receiving said invisible documents by the user, called "downlink bandwidth" or by the server called "uplink bandwidth".

11. The method according to claim 1, **characterised in that** the step of sending the document to be shared to the user comprises self-adapting a version of the document depending on the user's configuration.

12. The method according to claim 11, **characterised in that** the document sent to the users by the server is the document adapted to the smallest configuration of the set of said users' configurations, corresponding to the synchronous mode.

13. The method according to claim 11, **characterised in that** the document sent to the users by the server is the document best adapted to each of said users' configurations, corresponding to the asynchronous mode.

14. The method according to one of claims 11, 12 or 13, **characterised in that** the document is sent to the users from different locations, corresponds to sending the document from a location adapted to the configuration of each of said users, corresponding to the decentralised mode.

15. A server for controlling a display screen called a remote presentation server (20) communicating with at least one communication terminal established through a computer and/or telephone network, comprising means for registering and authenticating the users and being **characterised in that** it comprises:
- means for setting up a Documents & locations/Configurations table, being used as a correspondence between the formats of documents to be remotely presented or media to be used, their locations and the configurations required from the users' terminals to display these documents or broadcast these media, as well as a User/Configuration table listing the different users' configurations,
- means for automatically loading and/or converting the documents on the presentation server (20) and/or in other locations and means for updating a loading table,
- means for storing the documents to be shared in locations other than the remote presentation server (20),
- means for setting up an application on a user's terminal for reading the documents to be shared from locations other than the server, means for updating these documents and means for synchronising said documents with those present on the presentation server (20),
- means for testing and updating, on the server, each user's bandwidth and means for reading its software configuration, as well as means for updating the User/Configuration table,
- means for sending the documents in synchronous or asynchronous mode to the users, for self-adapting the documents or media to be shared depending on each user's configuration.

16. A system for remotely controlling a display screen comprising at least one server for registering and authenticating users, **characterised in that** it further comprises at least one remote presentation server (20) according to claim 15,
- at least one server (30) for converting data, comprising means for receiving documents and means for converting said documents into different formats, at least one server for storing users' configuration information,
- at least one server for testing the users' bandwidth, and then updating the User/Configuration correspondence table,
- at least one server for self-adapting the document to be shared depending on the configuration of each user.
